# EUROPEAN PATENT SPECIFICATION

(11) **EP 1 578 078 B1**
(45) Date of publication and mention of the grant of the patent: **03.05.2006**
(21) Application number: 04251149.3
(22) Date of filing: 27.02.2004
(51) Int. Cl.: H04L 29/06, H04L 12/28, H04L 12/56

(54) **System and method with adjustment for delivery of packets**
System und Verfahren mit Anpassung zur Zustellung von Paketen
Système et procédé d'adaptation pour la delivrance de paquets

(43) Date of publication of application: 21.09.2005
(60) Divisional application: 06101563.2
(73) Proprietor: Research In Motion Limited, Waterloo, Ontario N2L 3W8 (CA)
(72) Inventor: Dunk, Craig, Guelph Ontario N1L 1P2 (CA)
(74) Representative: Rickard, David John

(56) References cited:
- EP-A- 1 318 644
- WO-A-02/098057
- WO-A-20/04021717
- US-A1- 2003 115 261
- US-B1- 6 621 795

## Description

The present application relates generally to computer networking and more particularly to a system and method for delivery of packets.

Wireless communication technology now offers high quality voice and data services, with further enhancements on the horizon. As is well understood by those of skill in the art, wireless communications face several quality of service ("QOS") challenges that are not found in wired communications. More specifically, the quality of the wired link can change according to environmental factors, movements of the wireless subscriber station, or movement of objects within the path between the subscriber station and the base station. Despite advances to wireless communications, however, certain QOS limitations are still common. For example, transport control protocol ("TCP") packets employ a time-based fail check strategy, wherein packets that are not acknowledged as received are continually resent according to a predefined time period, the spacing between each delivery attempt increasing gradually. After a certain number of retries, the connection is deemed to have failed While this strategy can be effective in a wired link, it is not as suitable for packet delivery over wireless links that are experiencing connectivity problems.

WO02098057-A discloses a method of delivering packets over a link between an electronic device and a node comprising the steps of: determining a quality of said link by examining quality-of-service (QoS) information inherently available over a second layer of a protocol stack employed by said link, said second layer being a different layer in said protocol stack than a first layer for transmitting packets, and transmitting at least one packet over said link via said first layer of the protocol stack. However, the step of determining the quality of the link is carried out not at the device but at an intelligent content server to which the device is connected via the link.

Preferably the present invention provides a novel connection system and method that obviates or mitigates at least one of the above-identified disadvantages of the prior art.

The method in accordance with a first aspect of the present invention is characterized over that of WO02098057-A in that the step of determining the quality of the link is performed at the electronic device itself.

In accordance with a second aspect of the present invention, there is provided an electronic device for delivering packets over a link between said device and a node comprising: means for transmitting at least one packet over said link via a first layer of a protocol stack employed by said link; and means for repeating said transmitting step until said transmitting fails; means for determining a quality of said link by examining quality-of-service (QoS) information inherently available over a second layer of the protocol stack, said second layer being a different layer in said protocol stack than a first layer for transmitting packets, and means for developing a retry strategy for said transmitting step based on said determined quality; and means for re-transmitting said at least one packet according to said retry strategy; characterized in that the means for determining the quality of said link comprises part of said device and said means is arranged to perform the step of determining the quality of said link at said device.

Further aspects and features of the present invention will be apparent from the appended claims.

### BRIEF DESCRIPTION OF THE DRAWINGS

The invention will now be described by way of example only, and with reference to certain embodiments and the accompanying drawings, in which:
Figure 1 is a schematic representation of a system for delivery of packets in accordance with an embodiment of the invention;
Figure 2 is a schematic representation that shows the packet delivery manager and the wireless link of Figure 1 in greater detail;
Figure 3 is a flowchart depicting a method of delivering packets in accordance with another embodiment of the invention;
Figure 4 shows the manager and link of Figure 2 interacting with each other as part of the performance of the method of Figure 3;
Figure 5 shows an example of the results returned from the determination of link quality performed during the method of Figure 3;
Figure 6 shows the manager and link of Figure 2 interacting with each other as part of the performance of the method of Figure 3;
Figure 7 shows the manager and link of Figure 2 interacting with each other as part of the performance of the method of Figure 3;
Figure 8 shows a system for delivery of packets in accordance with another embodiment of the invention;
Figure 9 is a schematic representation that shows the packet delivery manager and the two wireless links of Figure 8 in greater detail;
Figure 10 is a flowchart depicting a method of delivering packets in accordance with another embodiment of the invention;
Figure 11 shows an example of a communication pathway within the system of Figure 8 prior to performing the method of Figure 10;
Figure 12 shows the manager and link of Figure 9 interacting with each other as part of the performance of the method of Figure 10;
Figure 13 shows the manager and link of Figure 9 interacting with each other as part of the performance of the method of Figure 10;
Figure 14 shows an example of the results returned from the determination of the quality of the first link performed during the method of Figure 10;
Figure 15 shows the manager and link of Figure 9 interacting with each other as part of the performance of the method of Figure 10;
Figure 16 shows an example of the results returned from the determination of the quality of the second link performed during the method of Figure 10;
Figure 17 shows the manager and link of Figure 9 interacting with each other as part of the performance of the method of Figure 10; and,
Figure 18 shows an example of a communication pathway within the system of Figure 8 after performing the method of Figure 10.

### DESCRIPTION OF PREFERRED EMBODIMENTS

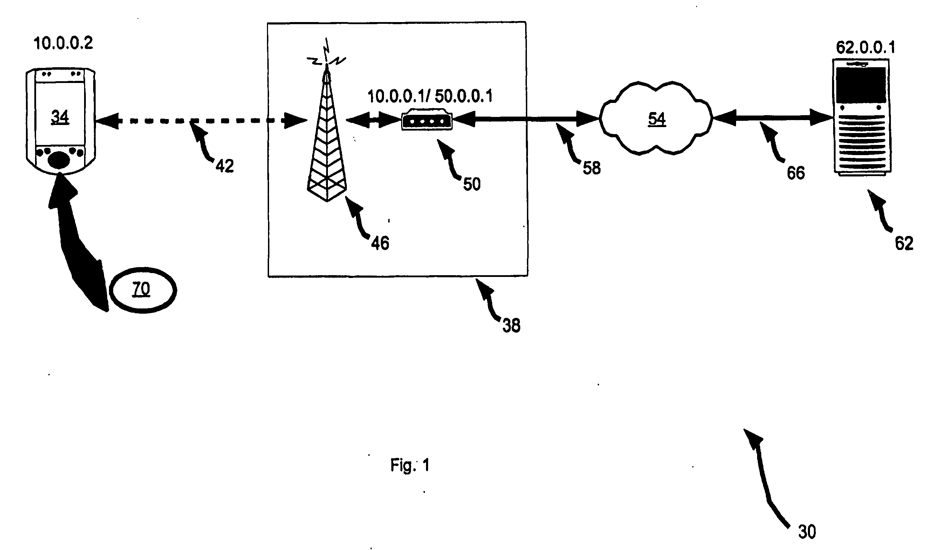

Referring now to Figure 1, a system for delivery of packets is indicated generally at 30. In a present embodiment, system 30 includes at least one client 34 that connects to a service provider node 38 via a wireless link 42. Node 38 includes a wireless base station 46 that interacts with client 34 via link 42 and a NAT gateway 50. In turn, gateway 50 connects to the Internet 54 via a backhaul 58. Backhaul 58 can be a T1, T3 or any other suitable link for connecting node 38 to Internet 54. Internet 54, itself, connects to a web-server 62 via a second backhaul 66.

In a present embodiment, client 34 is a battery operated device that is based on the computing environment and functionality of a wireless personal digital assistant. It is, however, to be understood that client 34 need not be battery operated and/or can include the construction and functionality of other electronic devices, such as cell phones, smart telephones, desktop computers or laptops with wireless 802.11 or bluetooth capabilities or the like. In general, the use of the term "client" is not be construed in a limiting sense, but is used in the context of the example embodiment.

It is also to be understood that, in a present embodiment, at least a portion of the connection between client 34 and web-server 62 is bandwidth-constrained. In system 30, since link 42 is a wireless connection that may need to serve a plurality of clients 34, then link 42 is bandwidth constrained in relation to backhaul 58, backhaul 66 and the other elements that compose the connection between client 34 and web-server 62. Such bandwidth constraints can thus interfere with the speed and effectiveness with which a user operating clients 34 can access Internet 54 and web-server 62. Such constraints can furthermore cause client 34 to need to resend packets that are dropped over link 42 due to limitations of link 42.

NAT gateway 50 is based on standard NAT technology and thus allows a multiple number of clients 34 connected to node 38 to connect to Internet 54 though a public Internet Protocol ("IP") address assigned to NAT gateway 50. Accordingly, client 34 (and other clients connected to node 38) will typically have a private IP address, while NAT gateway 50 will have a public IP address accessible to any party on Internet 54. Thus, as client 34 accesses Internet 54, web-server 62 will communicate with client 34 via gateway 50, with gateway 50 "translating" IP addresses during such communication. In an example unique to the present embodiment, client 34 has the private IP address "10.0.0.2", gateway 50 has the private IP address 10.0.0.1 and the public IP address of "50.0.0.1" and web-server 62 has the public IP address "62.0.0.1".

Client 34 is configured determine the quality of link 42 in order to develop a retry strategy for transport control protocol ("TCP") packets and the like when delivery of such packets to server 62 fail, particularly when delivery fails due to problems with link 42. The means by which client 34 determines the quality of link 42 is not particularly limited, but in a present embodiment client 34 utilizes a known signal strength metric as is currently implemented on known wireless devices, and which is often represented graphically on the display of such a device as indicating a number-of-bars of coverage. Using this known signal strength measurement, client 34 is able to track what level of signal strength provides a good likelihood that transmission can occur. Client 34 is also able to track changes in that signal level, in that if a failure occurs at a particular signal level, and then the signal strength increases by a predefined amount, then client 34 may determine that the quality of link 42 has now improved to a level that transmission will be successful. Regardless of how the quality of link 42 is determined, client 34 also includes a packet delivery manager 70 executing thereon that is operable to perform this determination and to develop the retry strategy therefrom. Further understanding about client 34 and this retry strategy will provided below.

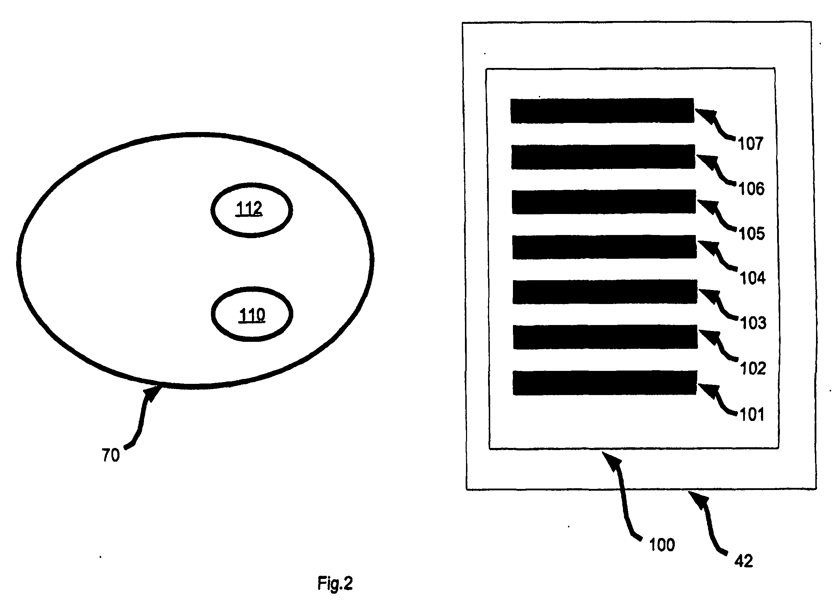

Referring now to Figure 2, link 42 is shown in greater detail, and in particular a network protocol stack 100 employed by link 42. In a present embodiment, network protocol stack 100 is based on the Open Systems Interconnect ("OSI") reference model, and thus includes a physical layer 101, a data link layer 102, a network layer 103, a transport layer 104, a session layer 105, a presentation layer 106 and an application layer 107.

Figure 2 also shows manager 70 in more detail, including two software objects 110 and 112. Object 110 is operable to determine the quality of link 42 and report that information to object 112. Object 112 is operable to employ a retry strategy for the delivery of packets (i.e. TCP packets and the like) over link 42 based on the quality of link 42 as determined by object 110.

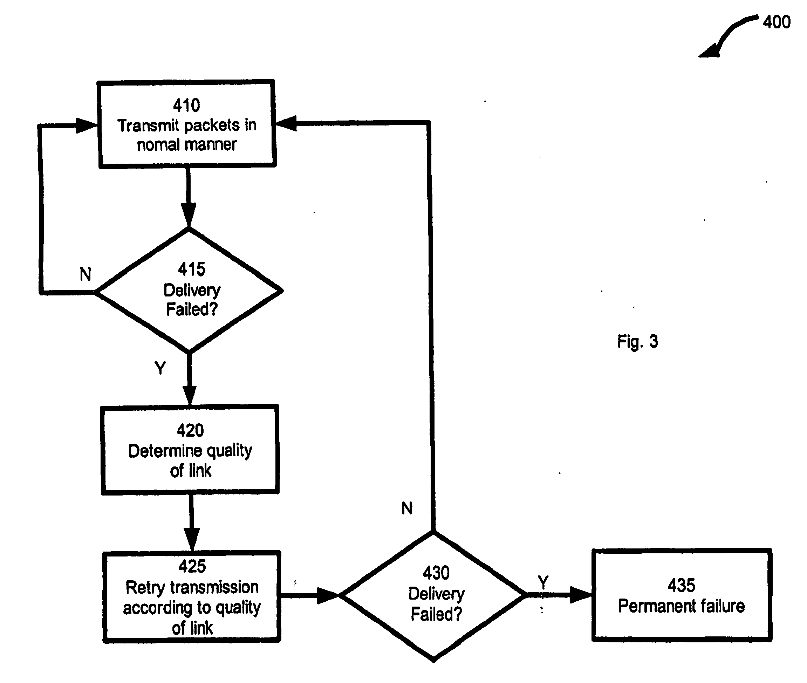

In order to help various aspects of system 30, reference will now be made to Figure 3 which shows a method of packet delivery and which is indicated generally at 400. In order to assist in the explanation of the method, it will be assumed that method 400 is operated by client 34 using system 30. However, it is to be understood that client 34, system 30 and/or method 400 can be varied, and need not work exactly as discussed herein in conjunction with each other, and that such variations are within the scope of the teachings herein.

Before discussing method 400, it will be assumed that client 34 is engaged in communications with web-server 62, and that such communications involve the delivery of TCP packets from client 34 to web-server 62 via link 42. Beginning first at step 410, at least one packet is transmitted in a normal manner. Thus, where TCP packets are being sent, such packets are sent over link 42 by any known means and/or according to known wireless packet data transmission standards that are being employed by system 30, such as via the General Packet Radio Service ("GPRS") or the like. As is understood by those of skill in the art, such packets are sent over transport layer 104 pursuant to known standards.

Next, at step 415, it is determined whether the delivery of the packets at step 410 failed. If "no", then method 415 cycles back to step 410 and transmission continues as previously described. This determination is made using known means, such as via client 34 failing to receive a "not acknowledge" signal from server 62, or server 62 failing to respond to an information request sent within that TCP packet. Thus, if delivery did fail, then method 400 advances to step 420.

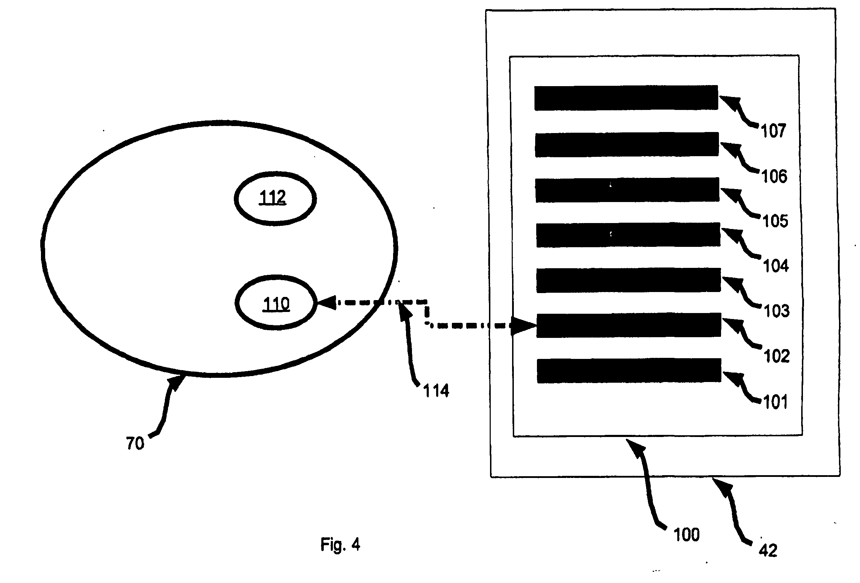

At step 420, the quality of the link is determined. In the present example, the quality of link 42 is determined. This step is represented graphically in Figure 4, as object 110 queries (indicated at reference character 114) information that is inherently available about the quality of link 42 from data link layer 102 of protocol stack 100 that is employed to implement link 42. In particular, layer 102 is queried by object 110 for known information about the quality of link 42, including such information as signal strength and reachability of base station 46.

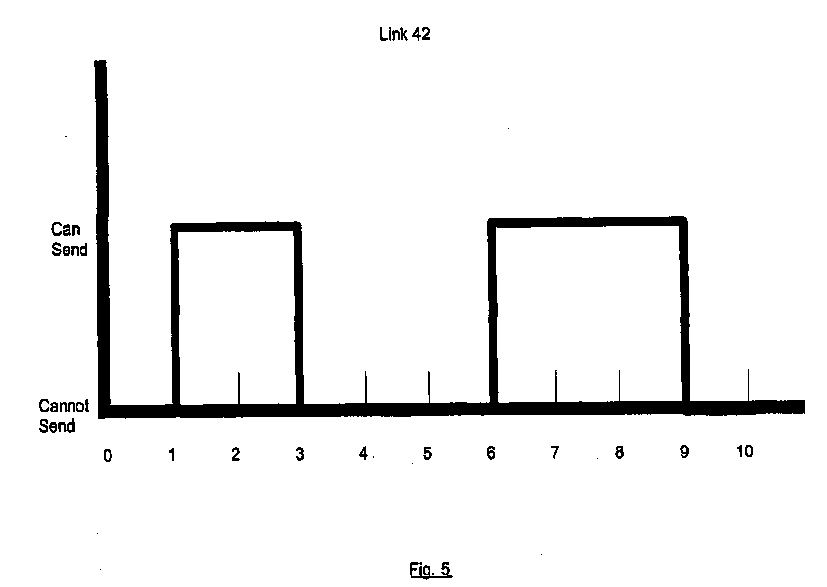

Figure 5 shows an example of the results that can be determined, (or at least estimated) as a result of performing step 420. Figure 5 thus shows a graph that represents the ability of client 42 to successfully send data to base station 46 over the previous ten second period. In this example, it is shown that over the previous ten second period, client 42 was successfully able to send data between the first and third seconds of the ten second period, and between the sixth and ninth second of the ten second period. During the remaining times, client 42 was unable to send data to base station 46. Those of skill in the art should appreciate that the results shown in Figure 5 are a simplified example for the purposes of assisting in explaining the present embodiment. In practice the results from performing step 420 would not likely include such sharp transitions and would instead show a greater variability in signal strength over time. By the same token, the results generated by step 420 can, in certain implementations, be considered an estimation of link quality, rather than an precise determination.

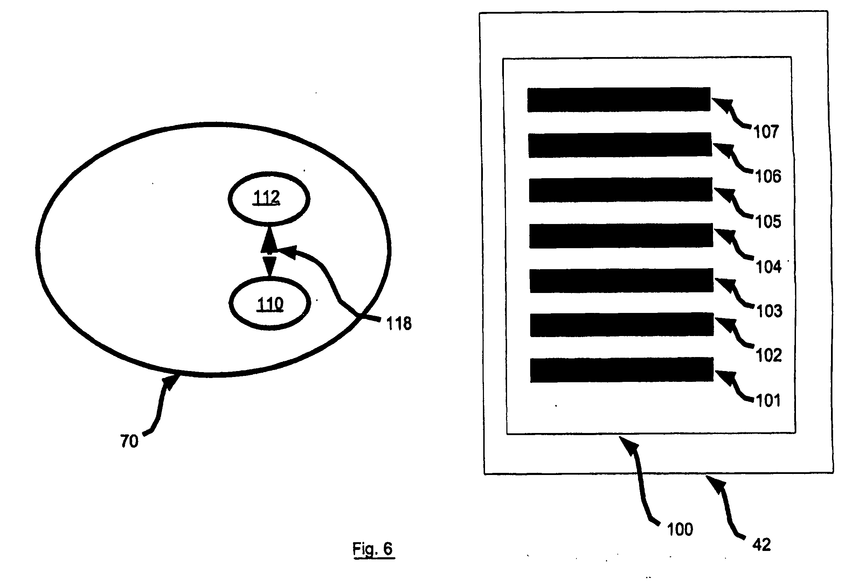

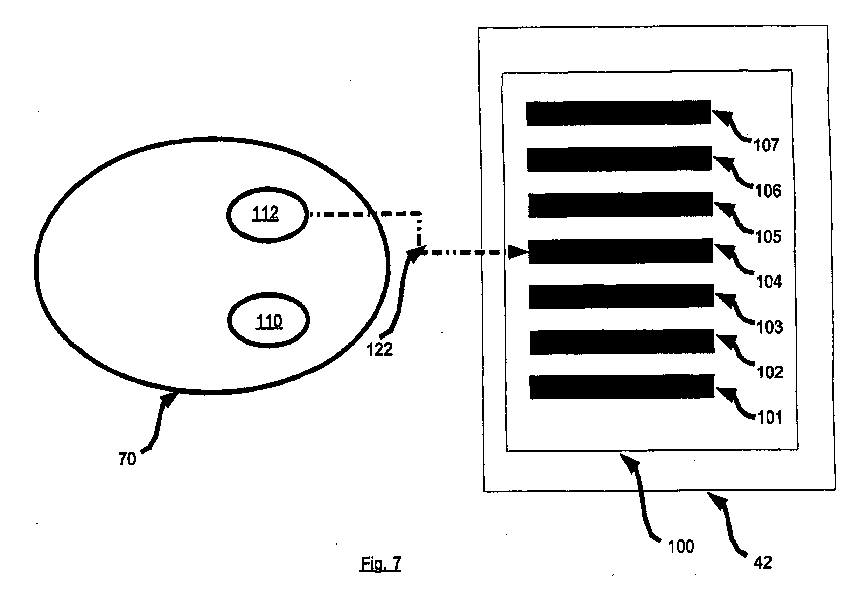

Method 400 then advances from step 420 to step 425, at which point transmission of the failed packets is retried in accordance with the information developed at step 420. This is represented in Figure 6 and Figure 7. In Figure 6, object 110 is shown reporting the results of its determination from step 420 to object 112, via the pathway represented by the double-headed arrow indicated at 118. In Figure 7, object 112 is shown as retrying to transmit the failed packets via layer 104 according to now known quality of link 42. The retrying of the transmission is represented by the double-headed arrow indicated at 122. The retrying employed at step 425 can be based on any criteria that makes use of the information gathered at step 420 in order to develop a retry strategy. In the simplest case, the retrying would be based on the assumption that each ten second period has the same "can send" and "cannot send" characteristics. Thus, based on this criteria, at step 425 the retrying of transmission would be performed only between the first and third seconds of the subsequent and/or between the sixth and ninth second of the subsequent ten second period. It is to again be reemphasized that any criteria that employs, at least in part, information gathered during method 400 can be employed.

Method 400 then advances to step 430, at which point a further determination is made as to whether delivery of the packets failed. Step 430 is performed in much the same way as step 415. If the delivery completely fails, then the method advances to step 435 and the delivery is deemed to be a permanent failure. However, if the delivery was successful, then method 400 would advance from step 430 back to step 410 where method 400 would begin anew.

It should be understood that a number of variations to step 400 are possible. For example, step 410 and 415 can be eliminated an all packets that are sent by client 34 can be sent based on a determination of the quality of link 42. By the same token, the determination of the failure at step 430 can be performed after a number of retries of steps 420 and 425, before deeming the entire delivery a permanent failure.

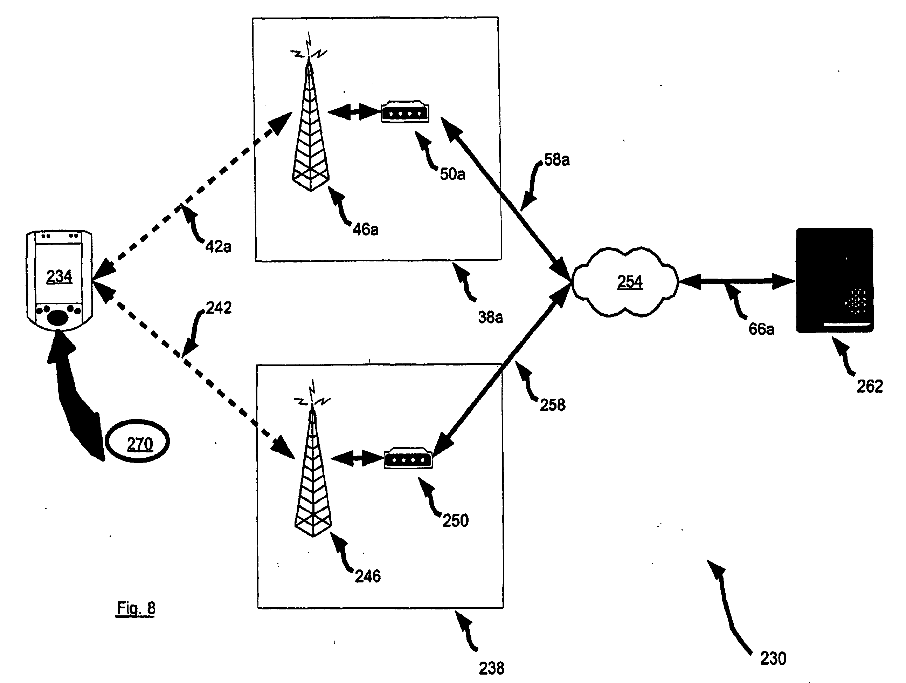

Referring now to Figure 8, a system for delivering packets in accordance with another embodiment of the invention is indicated generally at 230. System 230 contains many similar components to those found in system 30. In particular, components in system 230 that bear the same reference character as a similar component in system 30, but followed by the suffix "a", are substantially the same as their equivalent component in system 30, allowing for necessary modifications for the overall functionality of system 230 and subject to additional comments about those components. However, components in system 230 that bear the same reference character as a similar component in system 30, but preceded with the prefix "2", are somewhat different and thus greater discussion of those components is provided as needed.

More specifically, system 230 includes a client 234 that is substantially the same as client 30, except that client 234 includes voice functionality and is therefore able to carry voice calls. System 230 also includes a voice over intemet protocol ("VOIP") telephony handset 262 that is operable to conduct voice calls. System 230 also includes a VOIP network 254, which is essentially a combination of the Internet with a voice switch. The Internet portion of VOIP network 254 carries the VOIP calls, while the voice switch portion of converts those VOIP calls into a voice signal that can be utilized by handset 262. Thus, handset 262 is operable to conduct voice calls over network 254 via backhaul 66a.

Accordingly, node 38a and its components (base station 46a and gateway 50a) are operable to carry voice calls in a packetized format between client 234 and handset 262. In the present embodiment, node 38a is based on a cellular telephone system such as the Global System for Mobile Communications ("GSM"), or Code Division Multiple Access ("CDMA") or Time Division Multiple Access ("TDMA"), or Frequency Division Multiple Access ("FDMA") or the like. More specifically, the portion of any voice call between client 234 and handset 262 that is carried over link 42a is carried over a conventional voice channel as commonly employed in existing GSM, CDMA, TDMA, FDMA, etc. networks.

By the same token, system 230 also includes a second node 238, that includes its own base station 246 and gateway 250. Gateway 250, in turn, is operable to connect with network 254 via a backhaul 258. However, in contrast to node 38a, second node 238 is based on a short range wireless protocol, such as 802.11 or bluetooth. More specifically, the portion of any voice call between client 234 and handset 262 that is carried over link 242 is carried as a VOIP packets over an IP data channel that is commonly employed in existing short range networks such as 802.11 or bluetooth.

Thus, in addition to being able to conduct voice telephone calls, client 234 is also includes appropriate hardware, software and network interfaces to allow client 234 to communicate over links 42a and 242. Further, client 234 is operable determine the quality of link 42a and link 242 in order to determine which link 42a or 242 is most suitable (or otherwise desirable) for carrying a voice call from client 234 to handset 262. Client 234 includes a link manager 270 executing thereon that is operable to perform the above-mentioned determination and to utilize the most suitable link 42a or 242 based on that determination. Further discussion about client 234 and this link utilization will provided below.

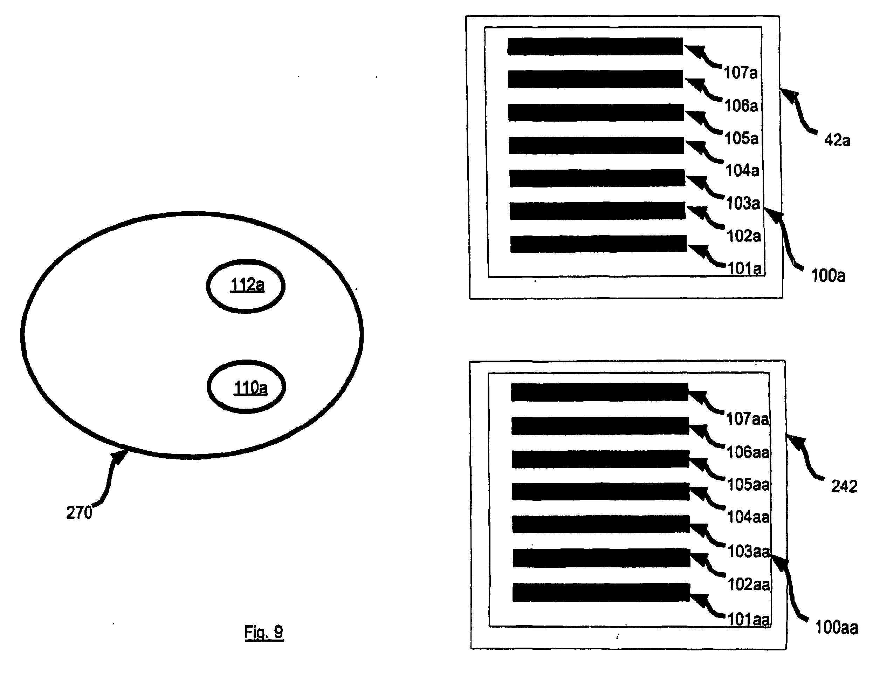

Referring now to Figure 9, links 42a and 242 are shown in greater detail, and in particular the network protocol stack 100a employed by link 42a and the network protocol stack 100aa employed by link 242. In a present embodiment, network protocol stacks 100a and 100aa are also based on the Open Systems Interconnect ("OSI") reference model, and thus each include the same layers as stack 100. Accordingly, stack 100a and stack 100aa and thus each include a physical layer 101a and 101aa, a data link layer 102a and 102aa, a network layer 103a and 103aa, a transport layer 104a and 104aa, a session layer 105a and 105aa, a presentation layer 106a and 106aa and an application layer 107a and 107aa respectively.

Figure 9 also shows manager 270 in more detail, including two software objects 110a and 112a. Object 110a is operable to determine the quality of links 42a and 242a and report that information to object 112a. Object 112a is operable to utilize an appropriate (or otherwise desired) one of links 42a and 242a for the delivery of packets (i.e. TCP packets and the like) based on the quality of those link 42a and 242a as determined by object 110a.

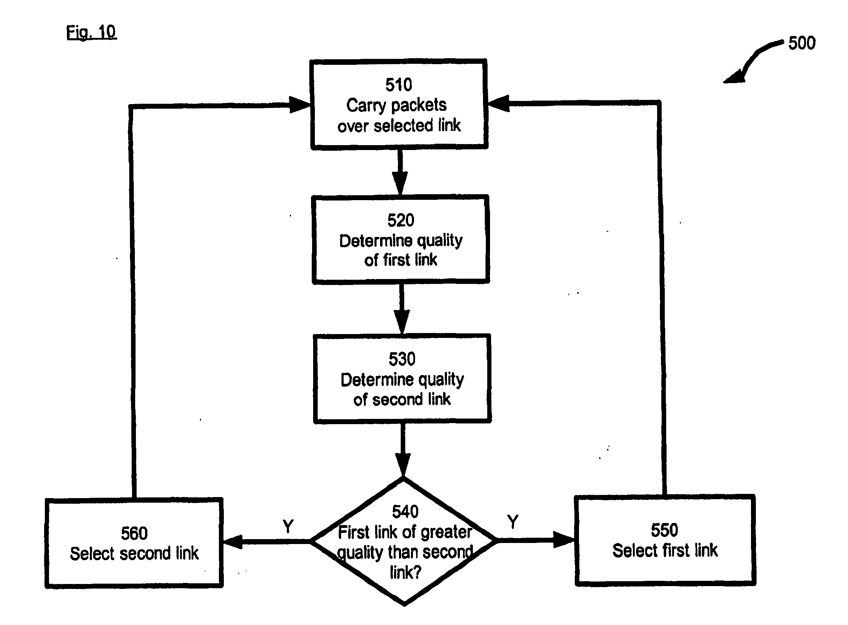

In order to help explain various aspects of system 30a, reference will now be made to Figure 10 which shows a method of packet delivery and which is indicated generally at 500. In order to assist in the explanation of the method, it will be assumed that method 500 is operated by client 234 using system 30a. However, it is to be understood that client 234, system 30a and/or method 500 can be varied, and need not work exactly as discussed herein in conjunction with each other, and that such variations are within the scope of the teachings herein.

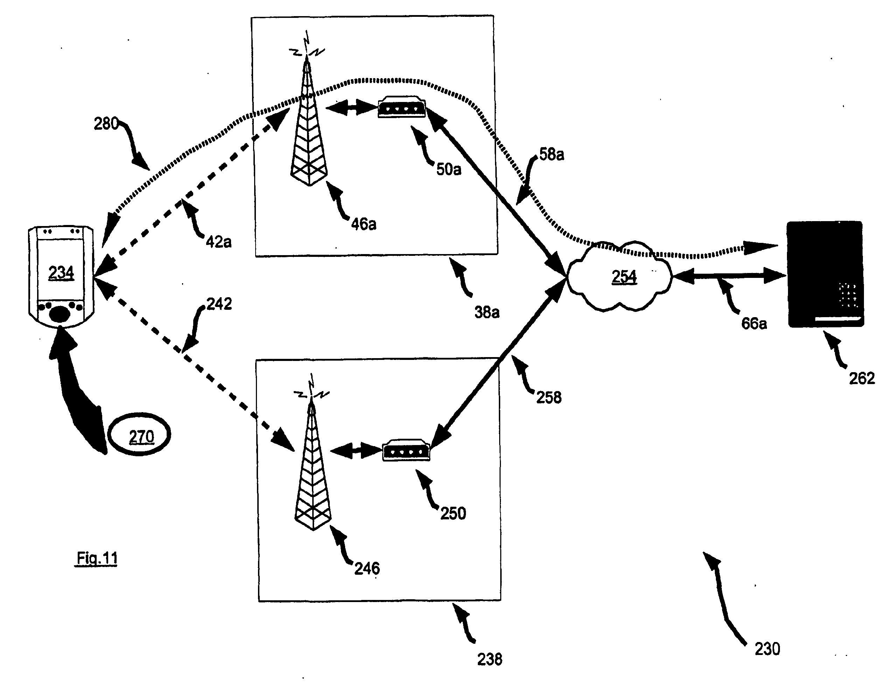

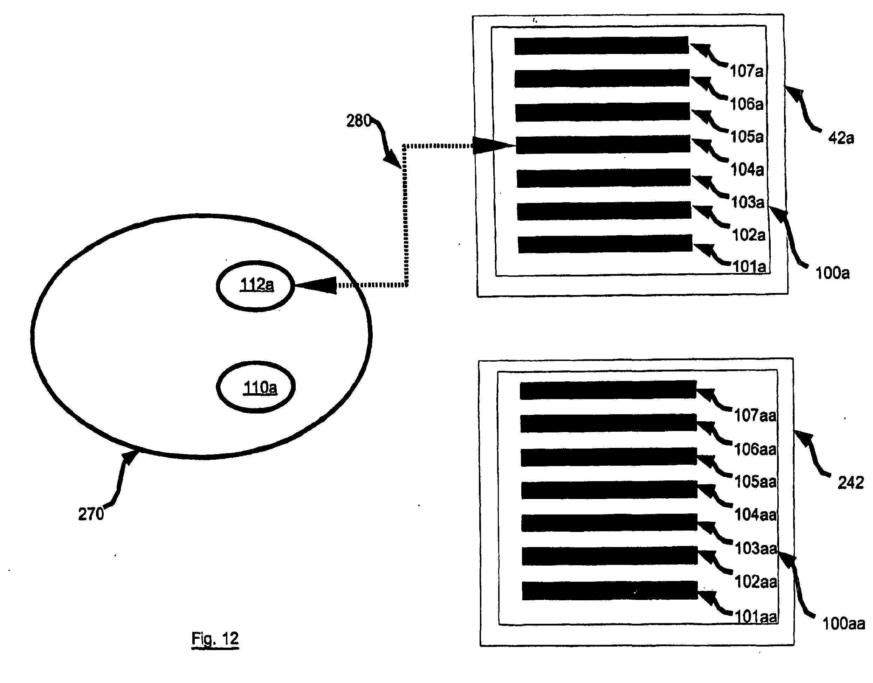

. Before discussing method 500, it will be assumed that link 42a has been selected in order to carry a VOIP phone call between client 234 and handset 262, and thus such communications at this initial state involve carrying voice packets between client 234 to handset 262 via link 42a. This initial state is represented in Figure 11, and this initial pathway of carrying voice packets is indicated at 280. This initial state is also represented in Figure 12, as object 112a is shown carrying voice packets over layer 104a of link 42a, along voice packet pathway 280.

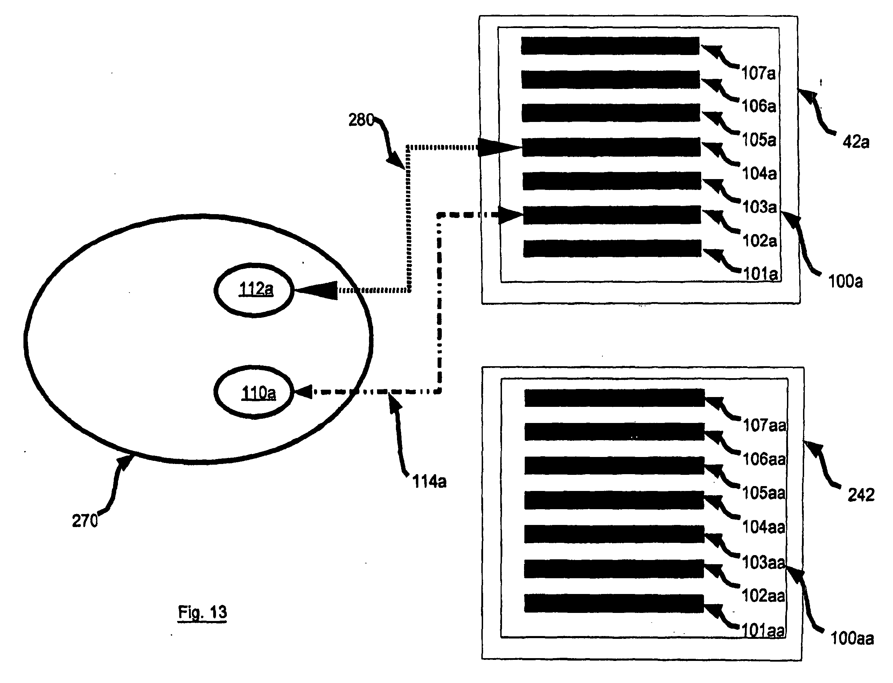

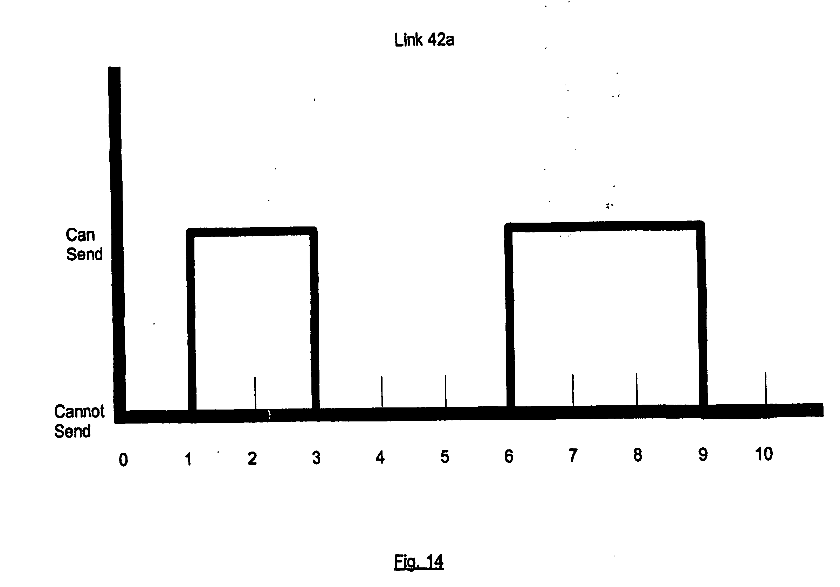

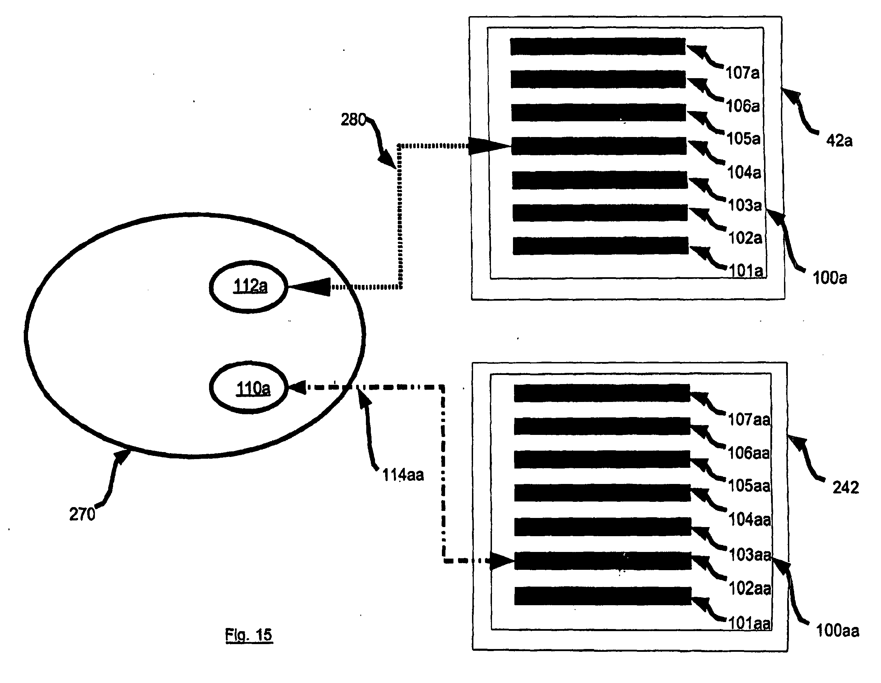

Beginning first at step 510, packets are carried along pathway 280 as shown in Figures 11 and 12. Next at step 520, the quality of a first link is determined. This is represented in Figure 13, as object 110a is shown querying layer 102a of link 42a, much in the same manner as previously described in relation to step 420 of method 400. This query is represented along pathway 114a in Figure 13. Figure 14 represents an example of the results of the query performed at step 520. In the example in Figure 15, it is shown that over the previous ten second period, client 234 link 42a was available for sending data between the first and third seconds of the ten second period, and between the sixth and ninth second of the ten second period. During the remaining times, client 234 was unable to send data to base station 46a over link 42a.

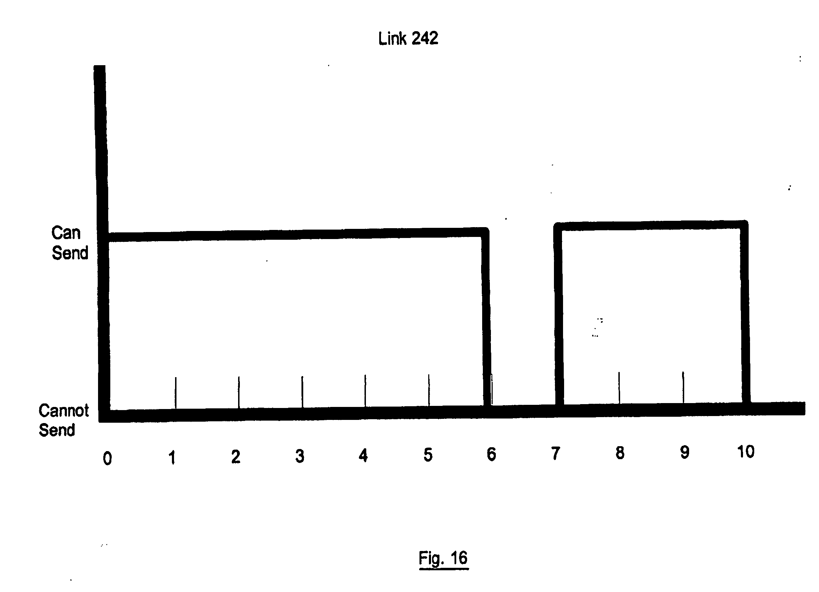

Next at step 530, the quality of a second link is determined. This is represented in Figure 15, as object 110a is shown querying layer 102aa of link 242a, much in the same manner as previously described in relation to step 420 of method 400. This query is represented along pathway 114aa in Figure 15. Figure 16 represents an example of the results of the query performed at step 520. In the example in Figure 16, it is shown that over the previous ten second period, client 234 link 42a was available for sending data between zero and six seconds of the ten second period, and between the seven and ten seconds of the ten second period. During the remaining times, client 234 was unable to send data to base station 246 over link 242.

Next, at step 540, a determination is made as to which of the links is of better quality. If the first link is of higher quality than the second link then the method advances to step 550, and the first link is selected for ongoing carrying of packets over that first link. If, however, the second link is of higher quality than the first link then the method advances to step 560 and the second link is selected for the ongoing carrying of packets over that second link. Method 500 returns to step 510 from both steps 550 and 560, at which point the method begins anew with traffic being carried over the selected link.

In the present example, a comparison of the quality of link 42a in relation to the quality of link 242 can be made by comparing Figures 14 and 16. It can be seen that link 242, in this example, is of higher quality than link 42a (i.e. because link 242 was available for a greater period of time over the previous ten second period than link 42a), and therefore at step 540 it would be determined that the second link was healthier than the first link and so method 500 would advance from step 540 to step 560.

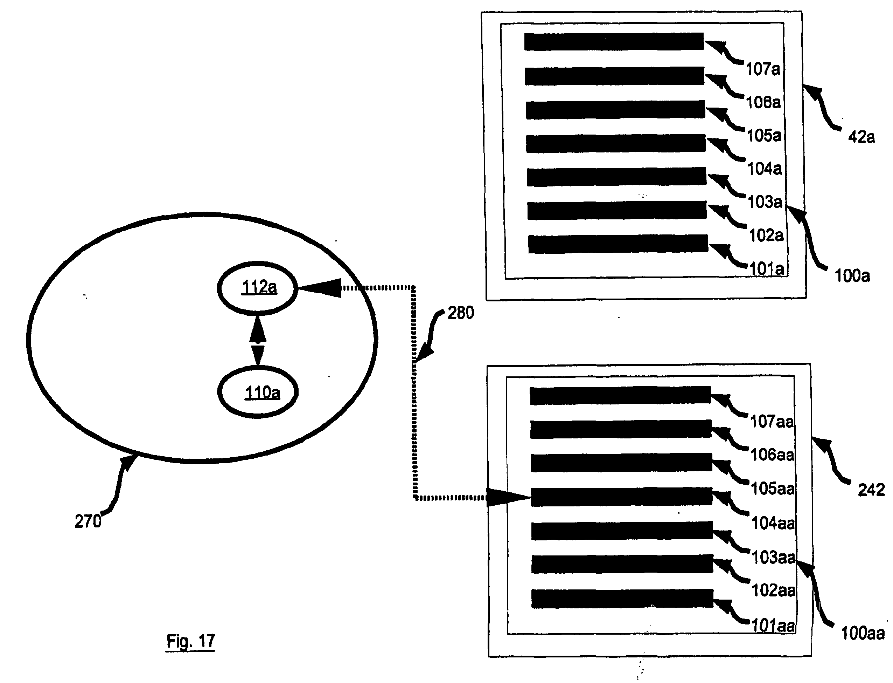

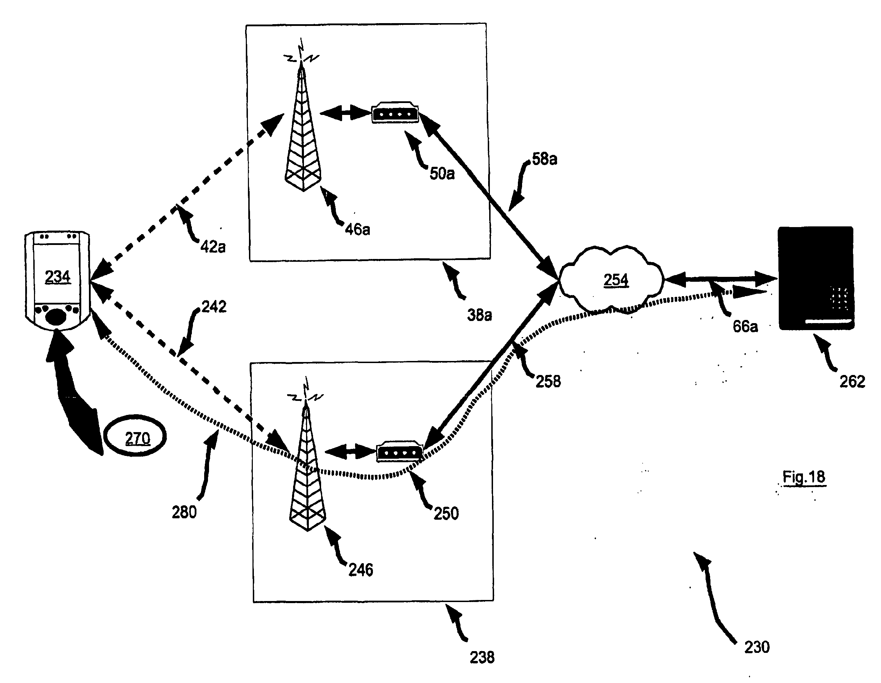

At step 560, the second link is selected. Steps 540 and 560 for this example are represented in Figure 17, wherein object 110a is shown communicating the results of the determinations made at steps 520 and 530, so that object 112a at step 540 can determine that the second link (i.e. link 242) is of greater quality than the first link (i.e. link 42a). Figure 17 additionally shows that voice packet pathway 280 is now being carried over layer 104aa of link 242 by object 112a, instead of over layer 104a. Figure 18 also reflects this change, as pathway 280 now travels via node 238.

It is to be understood that the actual mechanics of causing pathway 280 to switch from node 38a to node 238 will involve a number of substeps, and such substeps can be effected by any desired means. For example, assume that node 38a and node 238 are both Dynamic Host Configuration Protocol ("DHCP") devices, in that they each assign an IP address to device 234, then as part of the transition from the first link to the second link, then device 234 will initially inform handset 262 that the IP address being used to communicate with device 234 is about to change from the IP address for client 234 that is assigned by node 38a to the IP address for client 234 that is assigned by node 238.

It is to be reemphasized that the specific determination/estimation of quality described above in relation to steps 520-540 and Figures 14 and 16 is merely a simplified example for the purposes of assisting in the explanation. Of particular note, prior ten second quality sample is too short to provide a meaningful comparison, but serves to provide a simplified concept. In practice, those of skill in the art may implement any variety of desired or suitable criteria can be used to compare the two links and ultimately select one of those links in order to carry packets. Other criteria could also include bit rates, or even the relative cost to the subscriber owning client 234 to accessing a given link. Another specific criteria could include reachability, where additional equipment (not shown in system 30), such as firewalls, or call gateways, that may or may not permit the operation of the service over one of the links. Thus the pathway that has the best, or otherwise desired reachability would be given priority.. Thus, where the quality of both links 42a and 242 is substantially equal, then the ultimate decision of which link to choose may be based, at least in part, on the financial cost with using each link 42a or 242. In particular, in the short term it is at least considered that the cost of carrying a voice call over an 802.11 wireless LAN would be cheaper (or even free) in relation to the cost of carrying a voice call over a conventional cellular telephone network.

While only specific combinations of the various features and components have been discussed herein, it will be apparent to those of skill in the art that desired subsets of the disclosed features and components and/or alternative combinations of these features and components can be utilized, as desired. For example, it should also be understood that while system 30a relates to a VOIP telephone call at handset 262, it should be understood that system 30a can be modified to work with a traditional public switched telephone network ("PSTN") type of telephone call, through the use of appropriate PSTN gateways. System 30 can also be likewise so modified.

Furthermore, it should be understood that methods 400 and 500 can be combined, in that the performance of step 510 can include the performance of method 400, so that packets are transmitted by client 234 in accordance with a determined quality of the link being used to carry packets at step 510.

Furthermore, system 30a can also be modified to work with other types of services other than voice, and can relate to any type of service that can be carried over link 42a and link 242 on behalf of client 234. Other types of services can include, for example, web-browsing, email, paging, voice-messaging, etc.

Furthermore, system 30 can include additional nodes, in addition to nodes 38a and 238, provided that client 234 includes appropriate interfaces to communicate with those additional nodes. In this manner, method 500 can be modified to help select the link of the best or otherwise most desirable quality for client 234 from a plurality of available links.

Furthermore, while the embodiments discussed herein relate to wireless links 42, 42a and 242, the teachings herein can be applied to wired links as well. For example, link 42a may be a wired link, while a wired version link 242, i.e. an Ethernet cable, may become active while link 42a is in use. In this example, method 500 may select to transition the carrying of packets from the wireless link 42a to the now available Ethernet cable.

As an additional example, link 242 and 42a can be both based on the same technology (e.g. both links based on 802.11 or, both links based on GPRS), but where those links 242 and 42a each lie in different administrative domains. Since the teachings herein include an evaluation of layers outside of the layer 102, determinations can be made as to the configurations of those layers, and therefore allow for assessments of reachability of different services. For example, in the 802.11 environment, a cafe in an airport having an 802.11 hotspot may only allow browsing (via TCP Port 80, while a different 802.11 hotspot offered by the actual airport may allow all traffic including voice. Thus both links can be evaluated using the teachings herein to determine the best or otherwise most desirable link for carrying a VOIP call.

Embodiments herein provide various advantages over the prior art. For example, prior art link selection is typically performed within one particular technology (e.g. a handoff within a GPRS or CDMA network), but certain embodiments herein include selection of links between the same or different technologies (e.g. between GPRS and 802.11). An other example of an advantage is that the selection process of that link can be done serially, evaluating one link and then the next, to determine which link is most appropriate (or otherwise desirable or even possible) for a particular service (e.g. is it even possible to VOIP over that link.) However, when such determination is performed simultaneously, it is possible to use the teachings herein to maintain services that require low latency (like voice) which would not otherwise be possible without this coordinated evaluation. This is specifically advantageous over a known limitation in the independent nature of 802.11 nodes, which normally do not define a hand off of sufficiently low latency to maintain a voice call if you did not evaluate the two links simultaneously. Other advantages will be apparent those of skill in the art.

The above-described embodiments of the invention are intended to be examples and alterations and modifications may be effected thereto, by those of skill in the art, without departing from the scope of the invention which is defined solely by the claims appended hereto.

## Claims

1. A method of delivering packets over a link (42, 58, 66) between an electronic device (34) and a node (62) comprising the steps of:
transmitting at least one packet over said link (42, 58, 66) via a first layer (104) of a protocol stack (100) employed by said link; and
repeating said transmitting step until said transmitting fails;
determining a quality of said link by examining quality-of service (QoS) information inherently available over a second layer (102) of the protocol stack (100), said second layer being a different layer in said protocol stack than a first layer (104) for transmitting packets, and
developing a retry strategy for said transmitting step based on said determined quality; and
re-transmitting said at least one packet according to said retry strategy;
wherein said step of determining the quality of said link (42, 58, 66) is performed at said electronic device (34).

2. The method of claim 1, wherein it comprises the steps of:
resuming said method at said transmitting step using said retry strategy if said re-transmitting step succeeds; and,
terminating said method if said re-transmitting step fails.

3. The method of any preceding claim, wherein said second layer (102) is lower in said protocol stack (100) than said first layer (104).

4. The method of any one of claims 1 to 3, wherein said packets are Transport Control Protocol (TCP) packets.

5. The method of any preceding claim, wherein said link is a wireless link (42).

6. The method of claim 5, wherein said packets are transmitted over said wireless link (42) employing the General Packet Radio Service (GPRS) wireless packet data transmission standard.

7. The method of any preceding claim, wherein said transmitting step fails when said device (34) fails to receive a "not acknowledge" signal from said node (62).

8. The method of any one of claims 4 to 6, wherein said transmitting step fails when said device (34) does not receive a response to an information request transmitted within said TCP packet.

9. The method of any preceding claim, wherein the service used for delivery of said packets comprises a Voice over IP service.

10. The method of any one of claims 1 to 8, wherein the service used for delivery of said packets comprises a traditional PSTN type of telephone call, through the use of appropriate PSTN gateways.

11. The method of any preceding claim, wherein said determined quality is a transmission profile.

12. The method of claim 11, wherein said transmission profile is a record of successful transmissions from said device (34) to said node (62) or of signal strengths for a previous time period.

13. The method of claim 12, wherein said previous time period is 10 seconds.

14. The method of any one of claims 11 to 13, wherein said retry strategy comprises a mirror of the transmission profile.

15. The method of any preceding claim, wherein it comprises delivering packets over at least one of two links interconnecting the electronic device (34) and the node (62), comprising the steps of:
determining a quality of all of said links by examining QoS information inherently available over the second layer (102) of said protocol stack (100), said second layer being employed by all of said links;
developing a retry strategy for each of said links for use in transmitting said packets based on said determined qualities,
selecting one of said links based on which of said retry strategies results in a desired successful transmission;
re-transnutting said at least one packet according to said retry strategy of said selected one of said links;
resuming said method at said transmitting step over said selected one of said links using said retry strategy if said re-transmitting step succeeds; and
terminating said method if said re-transmitting steps fails.

16. An electronic device (34) for delivering packets over a link (42, 58, 66) between said device (34) and a node (62) comprising:
means for transmitting at least one packet over said link (42, 58, 66) via a first layer (104) of a protocol stack (100)employed by said link; and
means for repeating said transmitting step until said transmitting fails;
means (110) for determining a quality of said link by examining quality-of-service (QoS) information inherently available over a second layer (102) of the protocol stack (100), said second layer being a different layer in said protocol stack than a first layer (104) for transmitting packets, and
means (112) for developing a retry strategy for said transmitting step based on said determined quality; and
means for re-transmitting said at least one packet according to said retry strategy;
wherein the means (110) for determining the quality of said link comprises part of said device (34) and said means (110) is arranged to perform the step of determining the quality of said link at said device (34).

17. The device of claim 16, wherein it comprises:
means (70) for resuming the transmission of packets using said re-try strategy if the transmission of said at least one packet succeeds; and,
means for terminating the transmission of packets if the re-transmission of said at least one packet fails.

18. The device of claim 16 or claim 17, wherein said second layer (102) is lower in said protocol stack (100) than said first layer (104).

19. The device of any one of claims 16 to 18, wherein said packets are Transport Control Protocol (TCP) packets.

20. The device of any one of claims 16 to 19, wherein said link is a wireless link (42).

21. The device of claim 20, wherein said packets are transmitted over said wireless link (42) employing the General Packet Radio Service (GPRS) wireless packet data transmission standard.

22. The device of any one of claims 16 to 21, wherein said means for transmitting at least one packet identifies a packet transmission failure when said device (34) fails to receive a "not acknowledge" signal from said node (62).

23. The device of any one of claims 19 to 21, wherein said means for transmitting at least one packet identifies a packet transmission failure when said device (34) does not receive a response to an information request transmitted within said TCP packet.

24. The device of any one of claims 16 to 23, wherein the service used for delivery of said packets comprises a Voice over IP service.

25. The device of any one of claims 16 to 23, wherein the service used for delivery of said packets comprises a traditional PSTN type of telephone call, through the use of appropriate PSTN gateways.

26. The device of any one of claims 16 to 25, wherein said means (112) for developing the retry strategy based on the determined quality of the link is arranged to develop the strategy as a transmission profile.

27. The device of claim 26, wherein said transmission profile is a record of successful transmissions from said device (34) to said node (62) or of signal strengths for a previous time period.

28. The device of claim 27, wherein said previous time period is 10 seconds.

29. The device of any one of claims 26 to 28, wherein said means (112) for developing the retry strategy is arranged to develop the strategy as a mirror of the transmission profile.

30. The device of any one of claims 16 to 29, wherein it comprises means for delivering packets over at least one of two links interconnecting the electronic device (34) and the node (62), and comprises:
means (110) for determining a quality of all of said links by examining QoS information inherently available over the second layer (102) of said protocol stack (100), said second layer being employed by all of said links;
means (112) for developing a retry strategy for each of said links for use in transmitting said packets based on said determined qualities,
means for selecting one of said links based on which of said retry strategies results in a desired successful transmission;
means for re-transmitting said at least one packet according to said retry strategy of said selected one of said links;
means for resuming said method at said transmitting step over said selected one of said links using said retry strategy if said re-transmitting step succeeds; and
means for terminating said method if said re-transmitting steps fails.

31. A computer readable storage medium containing code means for the device of any of claims 16 to 30 for carrying out the steps of the method of any of claims 1 to 15.

32. A system comprising an electronic device (34) for delivering packets over a link (42, 58, 66) and a node (62) for receiving said packets from said device (34) over said link, wherein said device comprises the device of any of claims 16 to 30.

## Patentansprüche

1. Verfahren zum Zustellen von Paketen über eine Verbindung (42, 58, 66) zwischen einem elektronischen Gerät (34) und einem Knoten (62), umfassend die folgenden Schritte:
- Übertragen von mindestens einem Paket über die besagte Verbindung (42, 58, 66) über eine erste Schicht (104) eines Protokollstapels (100), der von besagter Verbindung benutzt wird; und
- Wiederholen des besagten Schritts des Übertragens, bis das besagte Übertragen fehlschlägt;
- Ermitteln einer Qualität der besagten Verbindung durch Überprüfen der inhärent über eine zweite Schicht (102) des Protokollstapels (100) verfügbaren Dienstgüte-Informationen, wobei es sich bei der zweiten Schicht um eine unterschiedliche Schicht in besagtem Protokollstapel als die erste Schicht (104) für das Übertragen von Paketen handelt, und
- Entwickeln einer Wiederholungsversuchsstrategie für den besagten Schritt des Übertragens basierend auf der besagten ermittelten Qualität; und
- Neuübertragen des besagten mindestens einen Pakets entsprechend der besagten Wiederholungsversuchsstrategie;
wobei der besagte Schritt des Ermittelns der Qualität der besagten Verbindung (42, 58, 66) in besagtem elektronischen Gerät (34) durchgeführt wird.

2. Verfahren gemäß Anspruch 1, wobei dieses die folgenden Schritte umfasst:
- Wiederaufnehmen des besagten Verfahrens in besagtem Schritt des Übertragens unter Verwendung der besagten Wiederholungsversuchsstrategie, falls der besagte Schritt des Neuübertragens erfolgreich ist; und
- Abbrechen des besagten Verfahrens, falls der besagte Schritt des Neuübertragens fehlschlägt.

3. Verfahren gemäß jedem der vorherigen Ansprüche, wobei die besagte zweite Schicht (102) innerhalb des besagten Protokollstapels (100) unterhalb der besagten ersten Schicht (104) liegt.

4. Verfahren gemäß jedem der Ansprüche 1 bis 3, wobei die besagten Pakete TCP-Pakete (Transport Control Protocol) sind.

5. Verfahren gemäß jedem der vorherigen Ansprüche, wobei die besagte Verbindung eine drahtlose Verbindung (42) ist.

6. Verfahren gemäß Anspruch 5, wobei die besagten Pakete unter Verwendung des Drahtlospaketdaten-Übertragungsprotokolls GPRS (General Packet Radio Service) über die besagte drahtlose Verbindung (42) übertragen werden.

7. Verfahren gemäß jedem der vorherigen Ansprüche, wobei der Schritt des Übertragens fehlschlägt, wenn das besagte Gerät (34) kein "Nicht Bestätigt"-Signal von besagtem Knoten (62) empfängt.

8. Verfahren gemäß jedem der Ansprüche 4 bis 6, wobei der besagte Schritt des Übertragens fehlschlägt, wenn das besagte Gerät (34) keine Antwort auf eine Informationsanforderung empfängt, die innerhalb des besagten TCP-Pakets übertragen wurde.

9. Verfahren gemäß jedem der vorherigen Ansprüche, wobei der Dienst, der zum Zustellen der besagten Pakete verwendet wird, einen Voice-over-IP-Dienst umfasst.

10. Verfahren gemäß jedem der Ansprüche 1 bis 8, wobei der Dienst, der zum Zustellen der besagten Pakete verwendet wird, einen traditionellen PSTN-Typ oder einen Telefonanruf durch die Verwendung geeigneter PSTN-Gateways umfasst.

11. Verfahren gemäß jedem der vorherigen Ansprüche, wobei die besagte ermittelte Qualität ein Übertragungsprofil ist.

12. Verfahren gemäß Anspruch 11, wobei das besagte Übertragungsprofil ein Datensatz aus erfolgreichen Übertragungen von besagtem Gerät (34) an besagten Knoten (62) oder aus Signalstärken für ein vorheriges Zeitintervall ist.

13. Verfahren gemäß Anspruch 12, wobei das besagte vorherige Zeitintervall 10 Sekunden beträgt.

14. Verfahren gemäß jedem der Ansprüche 11 bis 13, wobei die besagte Wiederholungsversuchsstrategie einen Spiegel des Übertragungsprofils umfasst.

15. Verfahren gemäß jedem der vorherigen Ansprüche, wobei dieses das Zustellen von Paketen über mindestens eine von zwei Verbindungen umfasst, welche das elektronische Gerät (34) und den Knoten (62) miteinander verbinden, und die folgenden Schritte umfasst:
- Ermitteln einer Qualität aller besagten Verbindungen durch Überprüfen der inhärent über die zweite Schicht (102) des besagten Protokollstapels (100) verfügbaren Dienstgüte-Informationen, wobei die zweite Schicht von allen besagten Verbindungen verwendet wird;
- Entwickeln einer Wiederholungsversuchsstrategie für jede der besagten Verbindungen zur Verwendung beim Übertragen der besagten Pakete basierend auf den besagten ermittelten Qualitäten;
- Auswählen einer der besagten Verbindungen basierend darauf, welche der besagten Wiederholungsversuchsstrategien in einer gewünschten erfolgreichen Übertragung resultiert;
- Neuübertragen des besagten mindestens einen Pakets entsprechend der besagten Wiederholungsversuchsstrategie der besagten ausgewählten einen der besagten Verbindungen;
- Wiederaufnehmen des besagten Verfahrens in besagtem Schritt des Übertragens über die besagte ausgewählte eine der besagten Verbindungen unter Verwendung der besagten Wiederholungsversuchsstrategie, falls der besagte Schritt des Neuübertragens erfolgreich ist; und
- Abbrechen des besagten Verfahrens, falls der besagte Schritt des Neuübertragens fehlschlägt.

16. Elektronisches Gerät (34) zum Zustellen von Paketen über eine Verbindung (42, 58, 66) zwischen dem besagten elektronischen Gerät (34) und einem Knoten (62), umfassend:
- Mittel zum Übertragen von mindestens einem Paket über die besagte Verbindung (42, 58, 66) über eine erste Schicht (104) eines Protokollstapels (100), der von besagter Verbindung benutzt wird; und
- Mittel zum Wiederholen des besagten Schritts des Übertragens, bis das besagte Übertragen fehlschlägt;
- Mittel (110) zum Ermitteln einer Qualität der besagten Verbindung durch Überprüfen der inhärent über eine zweite Schicht (102) des Protokollstapels (100) verfügbaren Dienstgüte-Informationen, wobei es sich bei der zweiten Schicht um eine unterschiedliche Schicht in besagtem Protokollstapel als die erste Schicht (104) für das Übertragen von Paketen handelt, und
- Mittel (112) zum Entwickeln einer Wiederholungsversuchsstrategie für den besagten Schritt des Übertragens basierend auf der besagten ermittelten Qualität; und
- Mittel zum Neuübertragen des besagten mindestens einen Pakets entsprechend der besagten Wiederholungsversuchsstrategie;
wobei das Mittel (110) zum Ermitteln der Qualität der besagten Verbindung einen Bestandteil des besagtem elektronischen Geräts (34) bildet und das besagte Mittel (110) so angeordnet ist, dass es den Schritt des Ermittelns der Qualität der besagten Verbindung in besagtem Gerät (34) durchführt.

17. Gerät gemäß Anspruch 16, wobei dieses umfasst:
- Mittel (70) zum Wiederaufnehmen des Übertragens von Paketen unter Verwendung der besagten Wiederholungsversuchsstrategie, falls das Übertragen des besagten mindestens einen Pakets erfolgreich ist; und
- Mittel zum Abbrechen des Übertragens von Paketen, wenn das Neuübertragen des besagten mindestens einen Pakets fehlschlägt.

18. Gerät gemäß Anspruch 16 oder Anspruch 17, wobei die besagte zweite Schicht (102) innerhalb des besagten Protokollstapels (100) unterhalb der besagten ersten Schicht (104) liegt.

19. Gerät gemäß jedem der Ansprüche 16 bis 18, wobei die besagten Pakete TCP-Pakete (Transport Control Protocol) sind.

20. Gerät gemäß jedem der Ansprüche 16 bis 19, wobei die besagte Verbindung eine drahtlose Verbindung (42) ist.

21. Gerät gemäß Anspruch 20, wobei die besagten Pakete unter Verwendung des Drahtlospaketdaten-Übertragungsprotokolls GPRS (General Packet Radio Service) über die besagte drahtlose Verbindung (42) übertragen werden.

22. Gerät gemäß jedem der Ansprüche 16 bis 21, wobei das besagte Mittel zum Übertragen mindestens eines Pakets ein Fehlschlagen der Paketübertragung feststellt, wenn das besagte Gerät (34) kein "Nicht Bestätigt"-Signal von besagtem Knoten (62) empfängt.

23. Gerät gemäß jedem der Ansprüche 19 bis 21, wobei das besagte Mittel zum Übertragen mindestens eines Pakets ein Fehlschlagen der Paketübertragung feststellt, wenn das besagte Gerät (34) keine Antwort auf eine Informationsanforderung empfängt, die innerhalb des besagten TCP-Pakets übertragen wurde.

24. Gerät gemäß jedem der Ansprüche 16 bis 23, wobei der Dienst, der zum Zustellen der besagten Pakete verwendet wird, einen Voice-over-IP-Dienst umfasst.

25. Gerät gemäß jedem der Ansprüche 16 bis 23, wobei der Dienst, der zum Zustellen der besagten Pakete verwendet wird, einen traditionellen PSTN-Typ oder einen Telefonanruf durch die Verwendung geeigneter PSTN-Gateways umfasst.

26. Gerät gemäß jedem der Ansprüche 16 bis 25, wobei das besagte Mittel (112) zum Entwickeln der Wiederholungsversuchsstrategie basierend auf der ermittelten Qualität der Verbindung so angeordnet ist, dass die Strategie als ein Übertragungsprofil entwickelt wird.

27. Gerät gemäß Anspruch 26, wobei das besagte Übertragungsprofil ein Datensatz aus erfolgreichen Übertragungen von besagtem Gerät (34) an besagten Knoten (62) oder aus Signalstärken für ein vorheriges Zeitintervall ist.

28. Gerät gemäß Anspruch 27, wobei das besagte vorherige Zeitintervall 10 Sekunden beträgt.

29. Gerät gemäß jedem der Ansprüche 26 bis 28, wobei das besagte Mittel (112) zum Entwickeln der Wiederholungsversuchsstrategie so angeordnet ist, dass die Strategie als ein Spiegel des Übertragungsprofils entwickelt wird.

30. Gerät gemäß jedem der Ansprüche 16 bis 29, wobei dieses Mittel zum Zustellen von Paketen über mindestens eine von zwei Verbindungen umfasst, welche das elektronische Gerät (34) und den Knoten (62) miteinander verbinden, und umfasst:
- Mittel (110) zum Ermitteln einer Qualität aller besagten Verbindungen durch Überprüfen der inhärent über die zweite Schicht (102) des besagten Protokollstapels (100) verfügbaren Dienstgüte-Informationen, wobei die zweite Schicht von allen besagten Verbindungen verwendet wird;
- Mittel (112) zum Entwickeln einer Wiederholungsversuchsstrategie für jede der besagten Verbindungen zur Verwendung beim Übertragen der besagten Pakete basierend auf den besagten ermittelten Qualitäten;
- Mittel zum Auswählen einer der besagten Verbindungen basierend darauf, welche der besagten Wiederholungsversuchsstrategien in einer gewünschten erfolgreichen Übertragung resultiert;
- Mittel zum Neuübertragen des besagten mindestens einen Pakets entsprechend der besagten Wiederholungsversuchsstrategie der besagten ausgewählten einen der besagten Verbindungen;
- Mittel zum Wiederaufnehmen des besagten Verfahrens in besagtem Schritt des Übertragens über die besagte ausgewählte eine der besagten Verbindungen unter Verwendung der besagten Wiederholungsversuchsstrategie, falls der besagte Schritt des Neuübertragens erfolgreich ist; und
- Mittel zum Abbrechen des besagten Verfahrens, falls der besagte Schritt des Neuübertragens fehlschlägt.

31. Computerlesbares Speichermedium mit darauf enthaltenen Codemitteln für das Gerät gemäß jedem der Ansprüche 16 bis 30 zum Ausführen der Schritte des Verfahrens gemäß jedem der Ansprüche 1 bis 15.

32. System, das ein elektronisches Gerät (34) umfasst zum Zustellen von Paketen über eine Verbindung (42, 58, 66) und einen Knoten (62) zum Empfangen der besagten Pakete von besagtem Gerät (34) über die besagte Verbindung, wobei das besagte Gerät das Gerät gemäß jedem der Ansprüche 16 bis 30 umfasst.

## Revendications

1. Méthode pour fournir des paquets sur une liaison (42, 58, 66) entre un dispositif électronique (34) et un noeud (62) mettant en jeu les étapes de :
transmission d'au moins un paquet sur ladite liaison (42, 58, 66) via une première couche (104) d'une pile de protocole (100) employée par ladite liaison ; et
répétition de ladite étape de transmission jusqu'à ce que ladite transmission échoue ;
détermination d'une qualité de ladite liaison par l'examen d'informations de qualité de service (QoS) dont la disponibilité est inhérente sur une deuxième couche (102) de la pile de protocole (100), ladite seconde couche étant une couche différente d'une première couche (104) dans ladite pile de protocole pour transmettre des paquets, et
développement d'une stratégie de nouvelle tentative pour ladite étape de transmission sur la base de ladite qualité déterminée ; et
retransmission dudit au moins un paquet conformément à ladite stratégie de nouvelle tentative ;
ladite étape de détermination de qualité de ladite liaison (42, 58, 66) étant réalisée au niveau dudit dispositif électronique (34).

2. La méthode de la revendication 1, comprenant les étapes de :
reprise de ladite méthode à ladite étape de transmission en utilisant ladite stratégie de nouvelle tentative si ladite étape de retransmission réussit ; et,
arrêt de ladite méthode si ladite étape de retransmission échoue.

3. La méthode d'une quelconque revendication précédente, dans le cadre de laquelle la deuxième couche (102) est inférieure à ladite première couche (104) dans ladite pile de protocole (100).

4. La méthode de l'une quelconque des revendications 1 à 3, dans le cadre de laquelle lesdits paquets sont des paquets TCP (Transport Control Protocol).

5. La méthode d'une quelconque revendication précédente, dans le cadre de laquelle ladite liaison est une liaison sans fil (42).

6. La méthode de la revendication 5, dans le cadre de laquelle lesdits paquets sont transmis sur ladite liaison sans fil (42) employant la norme de transmission de données de paquets sans fil GPRS (service général de paquets radio).

7. La méthode d'une quelconque revendication précédente, dans le cadre de laquelle ladite étape de transmission échoue quand ledit dispositif (34) ne parvient pas à recevoir un signal « not acknowledged » (non reconnu) dudit noeud (62).

8. La méthode de l'une quelconque des revendications 4 à 6, dans le cadre de laquelle ladite étape de transmission échoue quand ledit dispositif (34) ne reçoit pas une réponse à une demande d'information transmise dans ledit paquet TCP.

9. La méthode d'une quelconque revendication précédente, dans le cadre de laquelle le service utilisé pour la fourniture desdits paquets comprend un service de Voix sur IP.

10. La méthode de l'une quelconque des revendications 1 à 8, dans le cadre de laquelle le service utilisé pour la fourniture desdits paquets met en jeu un appel téléphonique traditionnel de type RTPC, par l'utilisation de passerelles RTPC appropriées.

11. La méthode d'une quelconque revendication précédente, dans le cadre de laquelle ladite qualité déterminée est un profil de transmission.

12. La méthode de la revendication 11, dans le cadre de laquelle ledit profil de transmission est un enregistrement de transmissions réussies dudit dispositif (34) audit noeud (62) ou de puissances de signal pour une période précédente.

13. La méthode de la revendication 12, dans le cadre de laquelle ladite période précédente est de 10 secondes.

14. La méthode de l'une quelconque des revendications 11 à 13, dans le cadre de laquelle ladite stratégie de nouvelle tentative comporte un miroir du profil de transmission.

15. La méthode d'une quelconque revendication précédente, mettant en jeu la fourniture de paquets sur au moins une de deux liaisons interconnectant le dispositif électronique (34) et le noeud (62) avec les étapes de :
détermination de la qualité de toutes lesdites liaisons par l'examen des informations de QoS dont la disponibilité est inhérente sur la deuxième couche (102) de ladite pile de protocole (100), ladite seconde couche étant employée par toutes lesdites liaisons ;
développement d'une stratégie de nouvelle tentative pour chacune desdites liaisons à utiliser dans la transmission desdits paquets sur la base desdites qualités déterminées.
sélection d'une desdites liaisons utilisant la stratégie, parmi celles de nouvelle tentative, qui produit une transmission réussie souhaitée ;
retransmission dudit au moins un paquet conformément à ladite stratégie de nouvelle tentative de ladite liaison parmi lesdites liaisons sélectionnées ;
reprise de ladite méthode à ladite étape de transmission sur une liaison sélectionnée parmi lesdites liaisons en utilisant ladite stratégie de nouvelle tentative si ladite étape de retransmission réussit ; et :
arrêt de ladite méthode si ladite étape de retransmission échoue.

16. Dispositif électronique (34) servant à fournir des paquets sur une liaison (42, 58, 66) entre ledit dispositif (34) et un noeud (62) comportant :
un moyen pour transmettre au moins un paquet sur ladite liaison (42, 58, 66) via une première couche (104) d'une pile de protocole (100) employée par ladite liaison ; et
un moyen pour répéter ladite étape de transmission jusqu'à ce que ladite transmission échoue ;
un moyen (110) pour déterminer une qualité de ladite liaison en examinant les informations de qualité de service (QoS) dont la disponibilité est inhérente sur une deuxième couche (102) de la pile de protocole (100), ladite seconde couche étant une couche différente d'une première couche (104) dans ladite pile de protocole pour transmettre des paquets, et
un moyen (112) de développement de stratégie de nouvelle tentative pour ladite étape de transmission basée sur ladite qualité déterminée ; et
un moyen pour retransmettre ledit au moins un paquet conformément à ladite stratégie de nouvelle tentative ;
le moyen (110) pour déterminer la qualité de ladite liaison comportant une partie dudit dispositif (34), et ledit moyen (110) étant configuré de manière à réaliser l'étape de détermination de qualité de ladite liaison au niveau dudit dispositif (34).

17. Le dispositif de la revendication 16, comportant :
un moyen (70) pour reprendre la transmission de paquets au moyen de ladite stratégie de nouvelle tentative si la transmission dudit au moins un paquet réussit ; et,
un moyen pour arrêter la transmission de paquets si la retransmission dudit au moins un paquet échoue.

18. Le dispositif de la revendication 16 ou revendication 17, la deuxième couche (102) étant inférieure à ladite première couche (104) dans ladite pile de protocole (100).

19. Le dispositif de l'une quelconque des revendications 16 à 18, lesdits paquets étant des paquets TCP (Transport Control Protocol).

20. Le dispositif de l'une quelconque des revendications 16 à 19, ladite liaison étant une liaison sans fil (42).

21. La méthode de la revendication 20, dans le cadre de laquelle lesdits paquets sont transmis par ladite liaison sans fil (42) employant la norme de transmission de données de paquets sans fil GPRS (service général de paquets radio).

22. Le dispositif de l'une quelconque des revendications 16 à 21, ledit moyen de transmission d'au moins un paquet identifiant un échec de transmission de paquets quand ledit dispositif (34) ne parvient pas à recevoir un signal « not acknowledged » (non reconnu) dudit noeud (62).

23. Le dispositif de l'une quelconque des revendications 19 à 21, ledit moyen de transmission d'au moins un paquet identifiant un échec de transmission de paquets quand ledit dispositif (34) ne reçoit pas de réponse à une demande d'informations transmise à l'intérieur dudit paquet TCP.

24. Le dispositif de l'une quelconque des revendications 16 à 23, le service utilisé pour la fourniture desdits paquets comprenant un service de Voix sur IP.

25. Le dispositif de l'une quelconque des revendications 16 à 23, le service utilisé pour la fourniture desdits paquets mettant en jeu un appel téléphonique traditionnel de type RTPC, par l'utilisation de passerelles RTPC appropriées.

26. Le dispositif de l'une quelconque des revendications 16 à 25, ledit moyen (112) de développement de stratégie de nouvelle tentative basée sur la qualité déterminée de la liaison étant configuré pour développer la stratégie sous la forme d'un profil de transmission.

27. Le dispositif de la revendication 26, ledit profil de transmission étant un enregistrement de transmissions réussies dudit dispositif (34) audit noeud (62) ou de puissances de signal pour une période précédente.

28. Le dispositif de la revendication 27, ladite période précédente étant de 10 secondes.

29. Le dispositif de l'une quelconque des revendications 26 à 28, ledit moyen (112) de développement de stratégie de nouvelle tentative étant configuré de manière à développer la stratégie sous la forme d'un miroir du profil de transmission.

30. Le dispositif de l'une quelconque des revendications 16 à 29, comportant un moyen pour fournir des paquets sur au moins une de deux liaisons interconnectant le dispositif électronique (34) et le noeud (62), et comportant :
un moyen (110) pour déterminer une qualité de toutes lesdites liaisons par l'examen des informations de QoS dont la disponibilité est inhérente sur la deuxième couche (102) de ladite pile de protocole (100), ladite deuxième couche étant employée par toutes lesdites liaisons ;
un moyen (112) de développement de stratégie de nouvelle tentative pour chacune desdites liaisons à utiliser dans la transmission desdits paquets sur la base desdites qualités déterminées,
un moyen pour sélectionner une desdites liaisons basée sur celle desdites stratégies de nouvelle tentative qui produit une transmission réussie souhaitée ;
un moyen pour retransmettre ledit au moins un paquet conformément à ladite stratégie de nouvelle tentative de ladite liaison parmi lesdites liaisons sélectionnées ;
un moyen pour reprendre ladite méthode à ladite étape de transmission sur une liaison sélectionnée parmi lesdites liaisons au moyen de ladite stratégie de nouvelle tentative si ladite étape de retransmission réussit ; et
un moyen pour arrêter ladite méthode si ladite étape de retransmission échoue.

31. Un support d'enregistrement lisible par ordinateur contenant un moyen de code pour le dispositif de l'une quelconque des revendications 16 à 30 permettant d'exécuter les étapes de la méthode de l'une quelconque des revendications 1 à 15.

32. Un système comportant un dispositif électronique (34) pour fournir des paquets sur une liaison (42, 58, 66) et un noeud (62) pour recevoir lesdits paquets dudit dispositif (34) sur ladite liaison, ledit dispositif comportant le dispositif de l'une quelconque des revendications 16 à 30.
